# FASCICULE DE BREVET EUROPEEN

(11) **EP 4 174 276 B1**
(45) Date de publication et mention de la délivrance du brevet: **04.09.2024**
(21) Numéro de dépôt: 22204639.3
(22) Date de dépôt: 31.10.2022
(51) Int. Cl.: E06B 9/322, E06B 9/68, E06B 9/88, H02K 11/28, H02K 11/33

(54) **ACTIONNEUR ÉLECTROMÉCANIQUE, DISPOSITIF D'OCCULTATION COMPRENANT UN TEL ACTIONNEUR ET PROCÉDÉ DE COMMANDE D'UN TEL ACTIONNEUR**
ELEKTROMECHANISCHER AKTUATOR, VERDUNKELUNGSVORRICHTUNG MIT SOLCH EINEM AKTUATOR UND VERFAHREN ZUR STEUERUNG SOLCH EINES AKTUATORS
ELECTROMECHANICAL ACTUATOR, BLACKOUT DEVICE COMPRISING SUCH AN ACTUATOR AND METHOD FOR CONTROLLING SUCH AN ACTUATOR

(30) Priorité: 02.11.2021 FR 2111630
(43) Date de publication de la demande: 03.05.2023
(73) Titulaire: Somfy Activites SA, 74300 Cluses (FR)
(72) Inventeur: TROUVE, Damien, 74300 Cluses (FR); RZESZUT, Michal, 74300 Cluses (FR); ZAWISZA, Mariusz, 74300 Cluses (FR); CIERENIEWICZ, Krzysztof, 74300 Cluses (FR); BAJDA, Kacper, 74300 Cluses (FR); CZECH, Giovanni, 74300 Cluses (FR)
(74) Mandataire: Lavoix

(56) Documents cités:
- EP-A1- 2 161 818
- EP-A1- 3 306 027
- US-A1- 2017 268 293

## Description

La présente invention concerne un actionneur électromécanique pour un dispositif d'occultation.

La présente invention concerne également un dispositif d'occultation comprenant un rail et un écran. L'écran est entraîné en déplacement par un tel actionneur électromécanique disposé à l'intérieur du rail.

La présente invention concerne, en outre, un procédé de commande d'un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de protection solaire ou de fermeture, tel qu'un store, en particulier à lames, un volet, une porte, une grille, un rideau ou tout autre matériel équivalent, appelé par la suite écran.

Un type particulier de dispositif d'occultation est celui des stores vénitiens dans lesquels un store est formé de lames dont le déplacement en hauteur et, éventuellement, l'orientation, peuvent être commandés au moyen d'un actionneur électromécanique. Avec ce type de matériel, il est connu d'équiper l'actionneur électromécanique d'un dispositif de détection de l'atteinte d'une position de fin de course haute de l'écran, ce dispositif de détection pouvant comprendre un organe mobile qui reçoit en appui une lame supérieure du store, comme décrit dans le document WO-A1-2020/099628.

D'autre part, un actionneur électromécanique doit pouvoir être commandé dans un mode de fonctionnement normal, où il entraîne l'écran entre des positions de fin de course haute et basse et un mode de fonctionnement d'apprentissage qui permet de définir ces positions de fin de course haute et basse. Une unité électronique de contrôle est généralement utilisée à cet effet et il est connu d'utiliser un dispositif mécanique pour commander le basculement de cette unité électronique de contrôle entre ces deux modes de fonctionnement. Des dispositifs mécaniques de ce type sont connus des documents EP-A2-0 844 633, EP-A1-0 951 725 et EP-A2-2 149 668.

Ces dispositifs mécaniques comprennent un nombre de pièces relativement important, dont des pignons. Ils sont complexes à installer et d'une fiabilité perfectible. D'un autre côté, les installateurs ont l'habitude d'agir sur de tels dispositifs mécaniques dont ils connaissent généralement l'emplacement et qu'ils ont l'habitude de manipuler sans précaution particulière. Par ailleurs, remplacer un dispositif mécanique par un interrupteur magnétique s'avère complexe du fait de l'encombrement des interrupteurs magnétiques connus, qui seraient difficiles à intégrer dans un actionneur électromécanique de taille habituelle pour le marché des dispositifs d'occultation. En outre, un interrupteur magnétique n'est généralement pas stable en position, ce qui peut s'avérer problématique. En effet, les vibrations induites lors du fonctionnement d'un dispositif d'occultation risquent de faire basculer un tel interrupteur entre ses deux positions.

C'est à ces problèmes qu'entend plus particulièrement remédier l'invention en proposant un actionneur électromécanique d'un dispositif d'occultation dont un dispositif de commande de basculement de son unité électronique de contrôle, entre des premier et deuxième modes de fonctionnement, est d'une construction simple, fiable et compacte et qui est stable en position.

On connaît également le document US 2017/0268293 A1 qui décrit un actionneur électromécanique d'un dispositif d'occultation. L'actionneur électromécanique comprend un moteur électrique, une unité électronique de contrôle, un carter, un arbre de sortie et un dispositif de commande de basculement. L'unité électronique de contrôle est configurée pour commander le moteur électrique dans un premier mode de fonctionnement et dans un deuxième mode de fonctionnement. Le moteur électrique et l'unité électronique de contrôle sont logés à l'intérieur du carter. L'arbre de sortie est monté rotatif autour d'un axe de rotation. Le dispositif de commande de basculement est configuré pour basculer l'unité électronique de contrôle entre les premier et deuxième modes de fonctionnement. Le dispositif de commande de basculement comprend un boîtier, un élément rotatif, un aimant permanent et un capteur magnétique. L'élément rotatif est monté pivotant autour d'un axe par rapport au boîtier, entre une première position et une deuxième position. L'aimant permanent est monté sur l'élément rotatif. Le capteur magnétique est configuré pour détecter une position de l'aimant permanent.

A cet effet, la présente invention concerne, selon un premier aspect, un actionneur électromécanique pour un dispositif d'occultation,
l'actionneur électromécanique comprenant au moins :
- un moteur électrique,
- une unité électronique de contrôle, l'unité électronique de contrôle étant configurée pour commander le moteur électrique dans un premier mode de fonctionnement et au moins dans un deuxième mode de fonctionnement,
- un carter, dans lequel sont logés le moteur électrique et l'unité électronique de contrôle,
- un arbre de sortie, l'arbre de sortie étant monté rotatif autour d'un axe de rotation, et
- un dispositif de commande de basculement, le dispositif de commande de basculement étant configuré pour basculer l'unité électronique de contrôle entre les premier et deuxièmes modes de fonctionnement.

Le dispositif de dispositif de commande de basculement comprend :
- un boîtier,
- un volet, le volet étant monté pivotant autour d'un axe par rapport au boîtier, entre une première position et une deuxième position,
- un aimant permanent, l'aimant permanent étant monté sur le volet, et
- un capteur magnétique, le capteur magnétique étant configuré pour détecter une position de l'aimant permanent.

Selon l'invention, le volet comprend au moins une patte de retenue en position du volet, la ou l'une des pattes de retenue en position étant maintenue en position par rapport au boîtier dans chacune des première et deuxième positions du volet, de sorte que chacune des première et deuxième positions du volet est stable.

Ainsi, le dispositif de commande de basculement peut être facilement intégré à l'actionneur électromécanique. La patte de retenue en position du volet par rapport au boîtier garantit un fonctionnement bistable du dispositif de commande de basculement.

De cette manière, le dispositif de commande de basculement permet de piloter de façon fiable le basculement de l'unité électronique de contrôle entre ses au moins deux modes de fonctionnement.

En outre, le fait de monter l'aimant permanent sur le volet permet de réaliser le dispositif de commande de basculement sous une forme compacte et garantit une détection fiable de son activation par un opérateur.

Selon des aspects avantageux mais non obligatoires de l'invention, un tel actionneur électromécanique peut incorporer une ou plusieurs des caractéristiques suivantes, prises selon toute combinaison techniquement admissible :
- La même patte de retenue en position est en appui contre le boîtier, lorsque le volet est dans la première position ou dans la deuxième position.
- Le boîtier comprend :
   - une première butée, la première butée étant configurée pour coopérer avec la ou l'une des pattes de retenue en position, lorsque le volet est dans la première position, et
   - une deuxième butée, la deuxième butée étant configurée pour coopérer avec la ou l'une des pattes de retenue en position, lorsque le volet est dans la deuxième position.
- Le volet est une pièce monobloc en matériau amagnétique.
- Le capteur magnétique est un capteur à effet Hall.
- Le volet comprend deux panneaux, chacun des deux panneaux étant affleurant avec un bord du boîtier dans l'une des première et deuxième positions du volet.
- L'actionneur électromécanique comprend, en outre, un dispositif de détection de fin de course, le dispositif de détection de fin de course étant configuré pour détecter l'atteinte d'une position de fin de course haute d'un écran du dispositif d'occultation entraîné en déplacement par l'actionneur électromécanique.
- Le dispositif de commande de basculement est adjacent au dispositif de détection de fin de course, le long d'un axe parallèle à l'axe de rotation.
- L'actionneur électromécanique comprend, en outre, un organe mécanique, l'organe mécanique étant configuré pour délivrer une information sonore, lorsque le volet pivote entre sa première position et sa deuxième position, et/ou inversement.
- L'organe mécanique est un élément de rappel élastique, l'organe mécanique étant interposé entre le volet et une partie du boîtier.

La présente invention concerne, selon un deuxième aspect, un dispositif d'occultation, le dispositif d'occultation comprenant au moins :
- un rail,
- un écran, et
- un actionneur électromécanique conforme à l'invention et tel que mentionné ci-dessus, l'actionneur électromécanique étant disposé à l'intérieur du rail, l'écran étant entraîné en déplacement par l'actionneur électromécanique.

La présente invention concerne, selon un troisième aspect, un procédé de commande d'un actionneur électromécanique pour un dispositif d'occultation conforme à l'invention et tel que mentionné ci-dessus.

Selon l'invention, le procédé comprend au moins les étapes suivantes :
- lecture dans une mémoire de l'unité électronique de contrôle d'une première valeur d'un paramètre représentatif d'une position de l'aimant permanent détectée par le capteur magnétique,
- détection d'une position de l'aimant permanent, au moyen du capteur magnétique, en déterminant une deuxième valeur du même paramètre représentatif de la position de l'aimant permanent, et
- comparaison de la première valeur, lue lors de l'étape de lecture, avec la deuxième valeur, déterminée lors de l'étape de détection.

Si, lors de l'étape de comparaison, la première valeur, lue à l'étape de lecture, est déterminée comme étant identique à la deuxième valeur, déterminée à l'étape de détection, alors le procédé met en oeuvre une première étape de mise en fonctionnement de l'unité électronique de contrôle dans le premier mode de fonctionnement.

En outre, si, lors de l'étape de comparaison, la première valeur, lue à l'étape de lecture, est déterminée comme étant différente de la deuxième valeur, déterminée à l'étape de détection, alors le procédé met en oeuvre une deuxième étape de mise en fonctionnement de l'unité électronique de contrôle dans le deuxième mode de fonctionnement.

D'autres particularités et avantages de l'invention apparaîtront encore dans la description ci-après, donnée à titre d'exemple non limitatif et faite en référence aux dessins annexés, dans lesquels :
[Fig 1] la figure 1 est une vue schématique en perspective d'un dispositif d'occultation conforme à un premier mode de réalisation de l'invention ;
[Fig 2] la figure 2 est une vue schématique en perspective d'un actionneur électromécanique du dispositif d'occultation illustré à la figure 1 ;
[Fig 3] la figure 3 est une vue schématique en coupe axiale de l'actionneur électromécanique illustré à la figure 2, selon le plan III représenté à la figure 2 ;
[Fig 4] la figure 4 est une vue schématique en coupe transversale et en perspective de l'actionneur électromécanique illustré aux figures 2 et 3, selon le plan IV représenté à la figure 2 ;

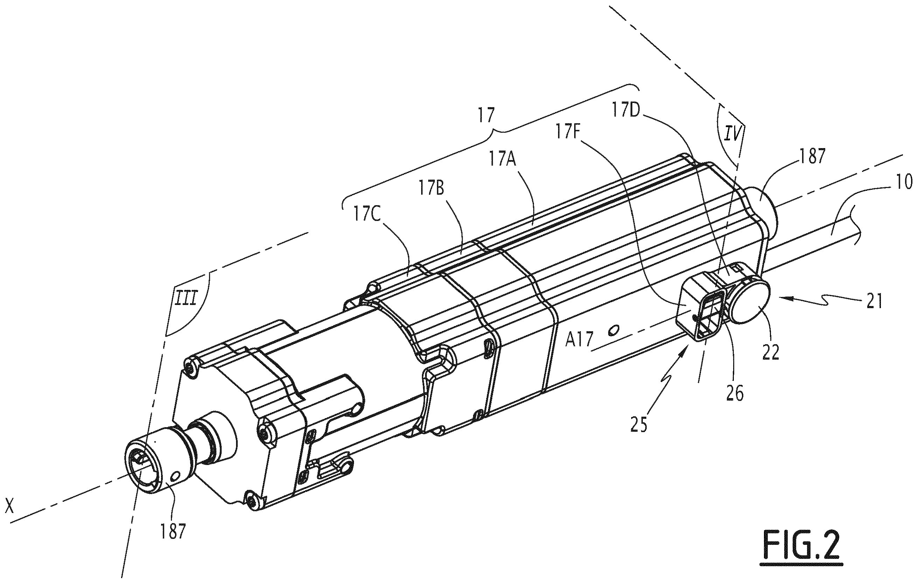

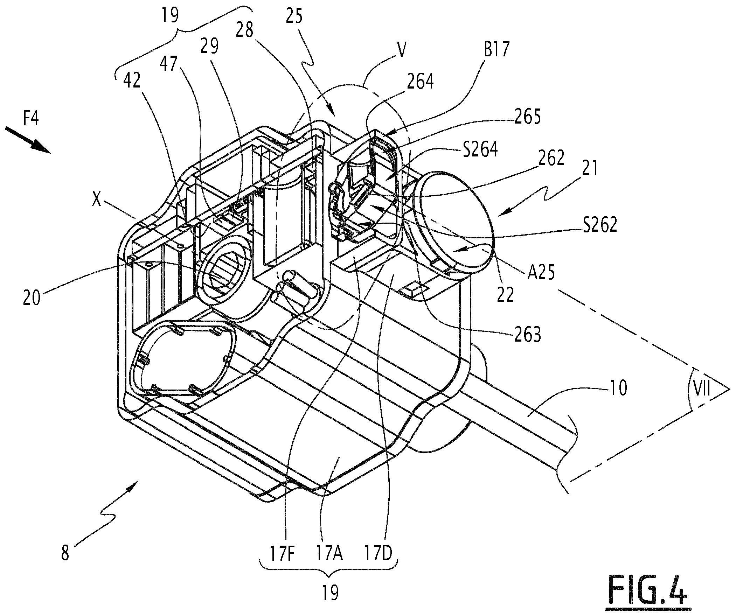

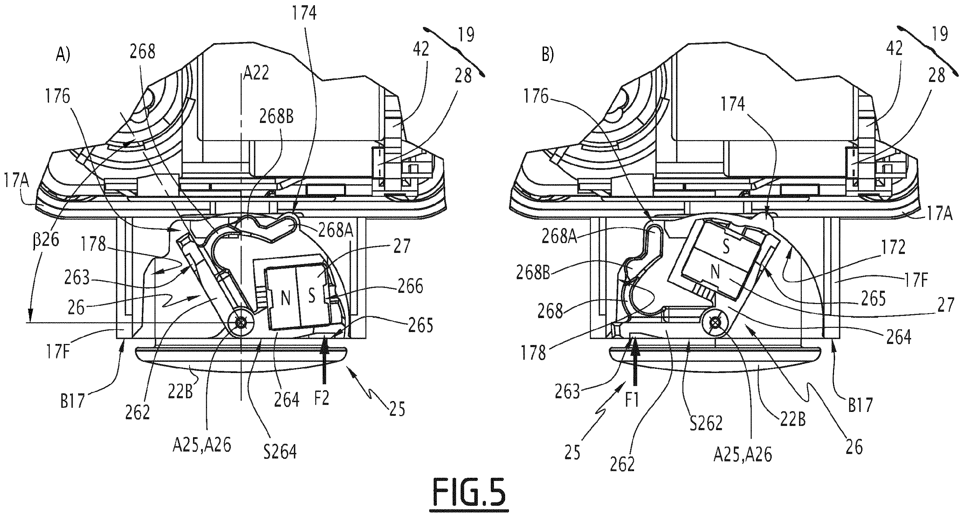

[Fig 5] la figure 5 représente, sur deux inserts A) et B), une vue schématique en coupe transversale de l'actionneur électromécanique illustré aux figures 2 à 4, correspondant au détail V à la figure 4, l'insert A illustrant une première position d'un volet d'un dispositif de commande de basculement correspondant à un premier mode de fonctionnement d'une unité électronique de contrôle de l'actionneur électromécanique et l'insert B illustrant une deuxième position du volet du dispositif de commande de basculement correspondant à un deuxième mode de fonctionnement de l'unité électronique de contrôle de l'actionneur électromécanique ;
[Fig 6] la figure 6 représente une vue schématique en perspective du volet appartenant au dispositif de commande de basculement illustré aux figures 2 à 5, selon deux angles différents ;
[Fig 7] la figure 7 est une vue schématique en coupe partielle et en perspective d'un actionneur électromécanique conforme à un deuxième mode de réalisation, cette coupe étant prise selon un plan comparable au plan VII représenté à la figure 4, un volet et un organe mécanique étant représentés en configuration éclatée ; et
[Fig 8] la figure 8 est un schéma blocs d'un algorithme d'un procédé de commande de l'actionneur électromécanique, tel qu'illustré aux figures 2 à 7, conforme à un mode de réalisation de l'invention.

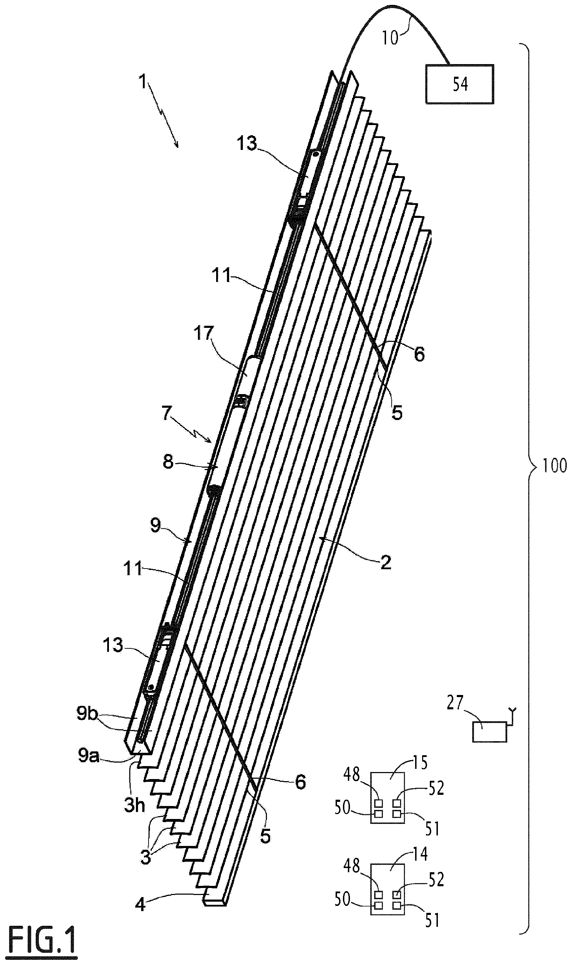

On décrit tout d'abord, en référence à la figure 1, une installation 100 installée dans un bâtiment, non représenté. Cette installation 100 comporte une ouverture, fenêtre ou porte, équipée d'un écran 2 appartenant à un dispositif d'occultation 1, conforme à un premier mode de réalisation de l'invention, dans l'exemple un dispositif d'occultation 1 de type store vénitien formant un store à lames.

En variante, non représentée, le dispositif d'occultation 1 peut être, notamment, un store plissé, un volet roulant, un portail roulant, une grille ou une porte.

Le dispositif d'occultation 1 est, préférentiellement, disposé à l'extérieur du bâtiment.

En variante, le dispositif d'occultation 1 est disposé à l'intérieur du bâtiment.

Le dispositif d'occultation 1 comprend des lames 3, en particulier orientables. Le dispositif d'occultation 1 comprend, en outre, une barre de charge 4. Ici, l'écran 2 est formé des lames 3 et de la barre de charge 4. La barre de charge 4 permet d'exercer une tension sur l'écran 2.

En pratique, la barre de charge 4 est fixée au niveau d'une extrémité inférieure de l'écran 2, en particulier dans une configuration assemblée du dispositif d'occultation 1 dans l'installation 100.

En variante, non représentée, l'écran 2 comprend une lame finale en remplacement de la barre de charge 4, celle-ci pouvant être lestée.

Le dispositif d'occultation 1 comprend des cordons d'entraînement 5 configurés pour permettre un déplacement vertical des lames 3 et de la barre de charge 4. Les cordons d'entraînement 5 peuvent également être appelés des lacettes.

En pratique, les lames 3 comprennent respectivement des ouvertures, non représentées, de passage de chaque cordon d'entraînement 5.

Dans l'exemple de réalisation illustré à la figure 1, le dispositif d'occultation 1 comprend, en outre, des cordons d'orientation 6 configurés pour permettre l'orientation des lames 3. Les cordons d'orientation 6 sont également appelés échelles.

Avantageusement, dans la configuration assemblée du dispositif d'occultation 1 dans l'installation 100, chaque lame 3 de l'écran 2 repose sur une partie de cordon d'orientation 6, en particulier horizontale et pouvant être appelée barreau, reliant deux brins de cordon d'orientation 6, en particulier verticaux.

Ainsi, les cordons d'orientation 6 permettent de garantir un espacement vertical régulier des lames 3 de l'écran 2.

L'orientation des lames 3 permet, notamment, d'ajuster la luminosité à l'intérieur d'une pièce du bâtiment.

Lors de la remontée de l'écran 2 et, en particulier, de la barre de charge 4, les lames 3 se superposent sur la barre de charge 4, de sorte à former un empilement.

Dans un exemple de réalisation, non représenté, le dispositif d'occultation 1 comprend deux coulisses. Chacune des coulisses est disposée le long d'un côté de l'écran 2 du dispositif d'occultation 1. Les coulisses sont configurées pour coopérer avec les lames 3 de l'écran 2, de sorte à guider les lames 3, lors du déploiement et du repli de l'écran 2.

Dans un autre exemple de réalisation, également non représenté, le guidage des lames 3 est réalisé par deux câbles. Chacun des câbles est disposé le long d'un côté de l'écran 2 du dispositif d'occultation 1.

Le dispositif d'occultation 1 comprend un dispositif d'entraînement motorisé 7.

Le dispositif d'entraînement motorisé 7 comprend au moins un actionneur électromécanique 8. L'actionneur électromécanique 8 est configuré pour entraîner, autrement dit entraîne, en déplacement l'écran 2. En particulier, l'actionneur électromécanique 8 permet de faire descendre ou monter les lames 3 et la barre de charge 4, autrement dit de déployer ou de replier l'écran 2, selon un mouvement vertical. L'actionneur électromécanique 8 permet, en outre, d'orienter les lames 3.

Le dispositif d'occultation 1 comprend, en outre, un rail 9, à l'intérieur duquel est disposé le dispositif d'entraînement motorisé 7, notamment l'actionneur électromécanique 8, en particulier dans une configuration assemblée du dispositif d'occultation 1.

Le rail 9 est disposé, autrement dit est configuré pour être disposé, au-dessus de l'écran 2, en particulier dans la configuration assemblée du dispositif d'occultation 1.

De manière générale, le rail 9 est disposé au-dessus de l'ouverture du bâtiment, ou encore en partie supérieure de l'ouverture du bâtiment.

Avantageusement, le rail 9 comprend au moins une paroi de fond 9a et deux parois latérales 9b.

Dans le mode de montage illustré à la figure 1, le rail 9 présente une section en forme de « U ».

Avantageusement, le dispositif d'entraînement motorisé 7 comprend, en outre, une pluralité d'enrouleurs. Les enrouleurs sont configurés pour enrouler et dérouler les cordons d'entraînement 5, de sorte à entraîner le déplacement vertical des lames 3 et de la barre de charge 4.

Ici, le dispositif d'entraînement motorisé 7 comprend deux enrouleurs, non visibles sur la figure 1.

Le nombre d'enrouleurs n'est pas limitatif et peut être différent, en particulier supérieur à deux.

Préférentiellement, les enrouleurs sont disposés à l'intérieur du rail 9.

Les cordons d'entraînement 5 sont reliés, d'une part, à la barre de charge 4 et, d'autre part, aux enrouleurs.

En pratique, dans la configuration assemblée du dispositif d'occultation 1 dans l'installation 100, l'extrémité inférieure de chaque cordon d'entraînement 5 est reliée à la barre de charge 4 et l'extrémité supérieure de chaque cordon d'entraînement 5 est reliée à l'un des enrouleurs.

Avantageusement, le dispositif d'entraînement motorisé 7 comprend des dispositifs de basculement 13, généralement dénommés « basculateurs ». Chaque enrouleur est respectivement disposé à l'intérieur d'un basculateur 13. C'est pourquoi les enrouleurs ne sont pas visibles à la figure 1.

En outre, les basculateurs 13 sont disposés, autrement dit sont configurés pour être disposés, à l'intérieur du rail 9, en particulier dans la configuration assemblée du dispositif d'occultation 1.

Dans l'exemple de réalisation illustré à la figure 1, le dispositif d'entraînement motorisé 7 comprend deux basculateurs 13.

Le nombre de basculateurs n'est pas limitatif et peut être différent, en particulier strictement supérieur à deux. Dans le cas où le nombre de basculateurs est supérieur ou égal à deux, l'actionneur électromécanique peut être disposé entre deux des basculateurs.

Ici, les basculateurs 13 sont disposés de part et d'autre de l'actionneur électromécanique 8. Préférentiellement, chaque basculateur 13 est disposé au voisinage d'une extrémité du rail 9, suivant la direction longitudinale de celui-ci.

Les basculateurs 13 sont configurés pour entraîner en rotation, sur une plage de valeur d'angle de rotation limitée, les cordons d'orientation 6, de sorte à orienter les lames 3.

Le dispositif d'entraînement motorisé 7, en particulier l'actionneur électromécanique 8, est commandé par une unité de commande. Autrement dit, l'unité de commande est configurée pour commander, c'est-à-dire commande, le dispositif d'entraînement motorisé 7, en particulier l'actionneur électromécanique 8.

L'unité de commande peut être, par exemple, une unité de commande locale 14 ou une unité de commande centrale 15.

L'unité de commande locale 14 peut être reliée, en liaison filaire ou non filaire, avec l'unité de commande centrale 15. L'unité de commande centrale 15 peut piloter l'unité de commande locale 14, ainsi que d'autres unités de commande locales similaires et réparties dans le bâtiment.

Le dispositif d'entraînement motorisé 7 est, de préférence, configuré pour exécuter les commandes de déplacement, notamment de montée ou descente et, éventuellement, d'orientation, de l'écran 2 du dispositif d'occultation 1, pouvant être émises, notamment, par l'unité de commande locale 14 ou l'unité de commande centrale 15.

L'installation 100 et, plus particulièrement, le dispositif d'occultation 1 comprend soit l'unité de commande locale 14, soit l'unité de commande centrale 15, soit l'unité de commande locale 14 et l'unité de commande centrale 15.

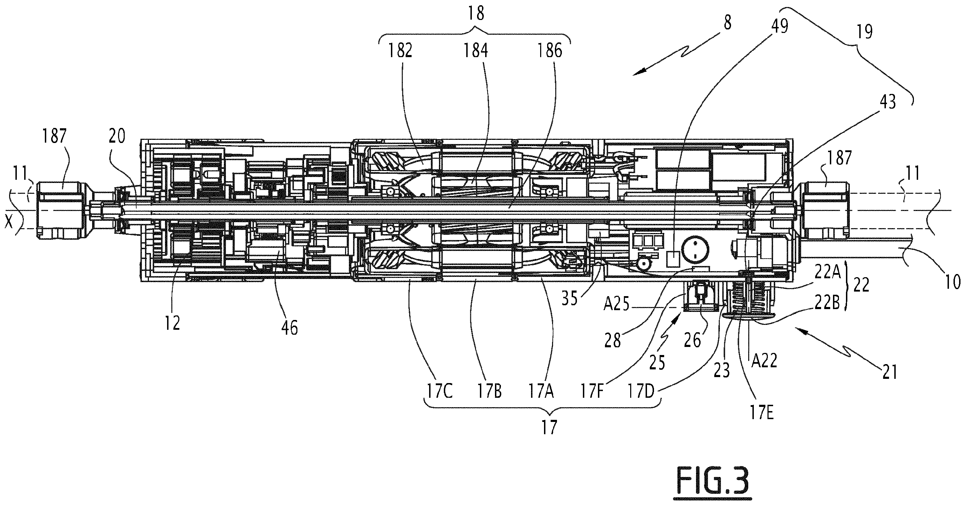

Des moyens de commande de l'actionneur électromécanique 8, permettant le déplacement de l'écran 2 du dispositif d'occultation 1 ainsi que l'orientation des lames 3 de l'écran 2, comprennent au moins une unité électronique de contrôle 19 illustrée aux figures 3 et 4. L'unité électronique de contrôle 19 est apte à mettre en fonctionnement un moteur électrique 18 de l'actionneur électromécanique 8 et, en particulier, permettre l'alimentation en énergie électrique du moteur électrique 18.

Avantageusement, le moteur électrique 18 peut être de type sans balais à commutation électronique, appelé également « BLDC » (acronyme du terme anglo-saxon BrushLess Direct Current) ou « synchrone à aimants permanents », de type asynchrone ou de type à courant continu.

Avantageusement, l'unité électronique de contrôle 19 est intégrée à l'actionneur électromécanique 8.

Ainsi, l'unité électronique de contrôle 19 commande, notamment, le moteur électrique 18, de sorte à ouvrir ou fermer l'écran 2, ainsi que de sorte à orienter les lames 3 de l'écran 2, comme décrit précédemment. L'unité électronique de contrôle 19 comprend une carte de circuit imprimé 42, visible aux figures 4 et 5 et qui supporte divers composants électroniques nécessaires à la commande du moteur électrique 18, dont ceux mentionnés ci-après.

En variante, non représentée, l'unité électronique de contrôle 19 peut comprendre plusieurs cartes de circuit imprimé.

Avantageusement, l'unité électronique de contrôle 19 comprend au moins un module de communication 49, en particulier de réception d'ordres de commande, les ordres de commande étant émis par un émetteur d'ordres, tel que l'unité de commande locale 14 ou centrale 15, ces ordres étant destinés à commander le dispositif d'entraînement motorisé 7.

Avantageusement, le module de communication 49 de l'unité électronique de contrôle 19 est de type filaire, autrement dit permet la réception et, éventuellement, l'émission d'ordres de commande transmis par des moyens filaires.

Avantageusement, l'unité électronique de contrôle 19, l'unité de commande locale 14 et/ou l'unité de commande centrale 15 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité ou encore une vitesse de vent, dans le cas où la station météorologique est déportée à l'extérieur du bâtiment.

L'unité électronique de contrôle 19, l'unité de commande locale 14 et/ou l'unité de commande centrale 15 peuvent également être en communication avec un serveur 27, de sorte à contrôler l'actionneur électromécanique 8 suivant des données mises à disposition à distance par l'intermédiaire d'un réseau de communication, en particulier un réseau internet pouvant être relié au serveur 27.

L'unité électronique de contrôle 19 peut être commandée à partir de l'unité de commande locale 14 ou centrale 15. L'unité de commande locale 14 ou centrale 15 est pourvue d'un clavier de commande. Le clavier de commande de l'unité de commande locale 14 ou centrale 15 comprend un ou plusieurs éléments de sélection 50 et, éventuellement, un ou plusieurs éléments d'affichage 51.

A titre d'exemples nullement limitatifs, les éléments de sélection peuvent être des boutons poussoirs ou des touches sensitives, les éléments d'affichage peuvent être des diodes électroluminescentes, un afficheur LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 14 ou centrale 15 comprend au moins un module de communication 48.

Ainsi, le module de communication 48 de l'unité de commande locale 14 ou centrale 15 est configuré pour émettre, autrement dit émet, des ordres de commande, en particulier par des moyens filaires.

En outre, le module de communication 48 de l'unité de commande locale 14 ou centrale 15 peut également être configuré pour recevoir, autrement dit reçoit, des ordres de commande, en particulier par l'intermédiaire des mêmes moyens.

Le module de communication 48 de l'unité de commande locale 14 ou centrale 15 est appelé par la suite premier module de communication. En outre, le module de communication 49 de l'unité électronique de contrôle 19 est appelé par la suite deuxième module de communication.

Le premier module de communication 48 de l'unité de commande locale 14 ou centrale 15 est configuré pour communiquer, autrement dit communique, avec le deuxième module de communication 49 de l'unité électronique de contrôle 19.

Ainsi, le premier module de communication 48 de l'unité de commande locale 14 ou centrale 15 échange des ordres de commande avec le deuxième module de communication 49 de l'unité électronique de contrôle 19, soit de manière monodirectionnelle, soit de manière bidirectionnelle.

Avantageusement, l'unité de commande locale 14 est un point de commande, pouvant être fixe ou nomade. Un point de commande fixe peut être un boîtier de commande destiné à être fixé sur une façade d'un mur du bâtiment ou sur une face du cadre dormant d'une fenêtre ou d'une porte. Un point de commande nomade peut être une télécommande, un téléphone intelligent ou une tablette.

Avantageusement, l'unité de commande locale 14 ou centrale 15 comprend, en outre, un contrôleur 52.

Les moyens de commande de l'actionneur électromécanique 8 comprennent des moyens matériels et/ou logiciels.

A titre d'exemple nullement limitatif, les moyens matériels peuvent comprendre au moins un microcontrôleur 29, tel qu'illustré à la figure 4.

Le dispositif d'entraînement motorisé 7, en particulier l'unité électronique de contrôle 19, est, de préférence, configuré pour exécuter des ordres de commande de déplacement, notamment de déploiement ou de repli de l'écran 2 du dispositif d'occultation 1, ainsi que d'orientation des lames 3. Ces ordres de commande peuvent être émis, notamment, par l'unité de commande locale 14 ou par l'unité de commande centrale 15.

Le dispositif d'entraînement motorisé 7 peut être contrôlé par l'utilisateur, par exemple par la réception d'un ordre de commande correspondant à un appui sur le ou l'un des éléments de sélection 50 de l'unité de commande locale 14 ou centrale 15.

Le dispositif d'entraînement motorisé 7 peut également être contrôlé automatiquement, par exemple par la réception d'un ordre de commande correspondant à au moins un signal provenant d'au moins un capteur, non représenté, et/ou à un signal provenant d'une horloge, non représentée. Le capteur et/ou l'horloge peuvent être intégrés à l'unité de commande locale 14 ou à l'unité de commande centrale 15.

Le capteur et/ou l'horloge peuvent également être considérés comme correspondant à une unité de commande, en particulier une unité de commande locale 14.

On décrit à présent, plus en détail et en référence aux figures 2 à 6, l'actionneur électromécanique 8 du dispositif d'entraînement motorisé 7 appartenant au dispositif d'occultation 1 de la figure 1.

L'actionneur électromécanique 8 comprend, entre autres, le moteur électrique 18 et l'unité électronique de contrôle 19.

Ici, le moteur électrique 18 comprend un stator 182, un rotor 184 et un arbre de rotation 186. L'arbre de rotation 186 est solidaire du rotor 184. L'arbre de rotation 186 est configuré pour être entraîné en rotation, autrement dit est entraîné en rotation, autour d'un axe de rotation X. Ici, l'arbre de rotation 186 dépasse aux deux extrémités opposées de l'actionneur électromécanique 8 et constitue un arbre de sortie pour cet actionneur électromécanique 8.

En variante, non représentée, l'arbre de rotation 186 est limité axialement à la longueur du moteur électrique 18 et connecté à deux arbres de sortie de l'actionneur électromécanique 8 qui dépassent respectivement à chacune des extrémités de celui-ci, voire à un arbre de sortie qui ne dépasse qu'à une seule extrémité de celui-ci.

Ici, le stator 182 et le rotor 184 sont positionnés de manière coaxiale autour de l'axe de rotation X. En outre, l'arbre de rotation 186 est intégré ou accouplé au rotor 184.

L'axe de rotation X est également l'axe de rotation des enrouleurs, dans une configuration montée du dispositif d'entraînement motorisé 7.

L'actionneur électromécanique 8 permet de déplacer l'écran 2 du dispositif d'occultation 1, en particulier selon un mouvement vertical, ainsi que d'orienter les lames de l'écran 2.

Avantageusement, l'actionneur électromécanique 8 comprend, en outre, un câble d'alimentation électrique 10.

L'actionneur électromécanique 8 est configuré pour être alimenté, autrement dit est alimenté, en énergie électrique par une source d'alimentation électrique principale 54, par l'intermédiaire du câble d'alimentation électrique 10.

Avantageusement, la source d'alimentation électrique principale 54 peut être un réseau d'alimentation électrique du secteur ou une batterie, pouvant être rechargée, par exemple, par un panneau photovoltaïque ou un chargeur, non représenté.

L'actionneur électromécanique 8 comprend, en outre, un carter 17, en particulier tubulaire.

Le moteur électrique 18 et l'unité électronique de contrôle 19 sont logés, autrement dit montés, à l'intérieur du carter 17, en particulier dans une configuration assemblée de l'actionneur électromécanique 8.

Ici, le carter 17 de l'actionneur électromécanique 8 comprend une pluralité de tronçons, dont au moins trois tronçons désignés par les références 17A, 17B, 17C. Il est de forme parallélépipédique et, plus particulièrement, présente une section de forme globalement rectangulaire.

En variante, non représentée, le carter 17 de l'actionneur électromécanique 8 est de forme cylindrique à section circulaire.

Avantageusement, l'actionneur électromécanique 8 comprend, en outre, au moins un réducteur 12.

Le réducteur 12 comprend au moins un étage de réduction. L'étage de réduction peut être un train d'engrenages de type épicycloïdal.

Le type et le nombre d'étages de réduction du réducteur ne sont pas limitatifs. Les étages de réduction peuvent être, par exemple, au nombre de deux ou trois.

Chaque extrémité de l'arbre de rotation 186 porte une douille 187 d'accouplement à un arbre d'entraînement 11 de l'un des enrouleurs.

Chaque enrouleur est ainsi entraîné en rotation, au niveau de l'un des basculateurs 13, par l'un des arbres d'entraînement 11 couplé avec l'arbre de sortie 186 de l'actionneur électromécanique 8.

Avantageusement, l'actionneur électromécanique 8 comprend, en outre, un frein 46, comme illustré à la figure 3.

A titre d'exemples nullement limitatifs, le frein 46 peut être un frein à ressort, un frein à came, un frein magnétique ou un frein électromagnétique.

Ici, le réducteur 12 et le frein 46 sont également logés dans le carter 17 de l'actionneur électromécanique 8.

En variante, non représentée, le réducteur 12 et le frein 46 sont disposés à l'extérieur du carter 17 de l'actionneur électromécanique 8.

Avantageusement, l'actionneur électromécanique 8 comprend, en outre, un dispositif de détection de fin de course 21.

L'écran 2 comprend la pluralité de lames 3, dont une première lame 3h. La première lame 3h fait face à la paroi de fond 9a du rail 9, en particulier dans la configuration assemblée du dispositif d'occultation 1. Autrement dit, la première lame 3h de l'écran 2 correspond à la lame 3 supérieure de l'écran 2.

Dans le cas d'un store à lames, une position haute, en particulier de sécurité, correspond à une mise en appui de la première lame 3h de l'écran 2 contre un élément du dispositif de détection de fin de course 21.

Le dispositif de détection de fin de course 21 permet, notamment, de déterminer l'atteinte de la position de fin de course haute de l'écran 2.

Le dispositif de détection de fin de course 21 est généralement appelé « champignon ».

Une position de fin de course haute, en particulier de fonctionnement, correspond à une position de fin de course haute prédéterminée, en particulier programmée au moyen de l'unité électronique de contrôle 19 et déterminée au moyen d'un dispositif de comptage 35.

En outre, une position de fin de course basse correspond à une position de fin de course basse prédéterminée, en particulier programmée au moyen de l'unité électronique de contrôle 19 et déterminée au moyen du dispositif de comptage 35, ou à la mise en appui de la barre de charge 4 contre un seuil de l'ouverture du bâtiment, ou encore au déploiement complet de l'écran 2.

Ici, le dispositif de comptage 35 peut être de type magnétique. Un tel dispositif de comptage 35 comprend au moins une roue, pouvant être assemblée sur l'arbre de rotation 186 du moteur électrique 18, et des capteurs à effet Hall, qui ne sont pas représentés en détail.

Par ailleurs, le type de dispositif de comptage 35 n'est pas limitatif et peut être différent, en particulier de type optique ou de type temporel et réalisé au travers du microcontrôleur 29 de l'unité électronique de contrôle 19.

Avantageusement, le dispositif de détection de fin de course 21 comprend un organe 22, mobile à l'intérieur d'un boîtier 17D formé par une partie du carter 17, dans l'exemple monobloc avec la partie 17A du carter 17, et, éventuellement, un organe de rappel élastique 23 formé par un ressort hélicoïdal.

En variante, non représentée, le boîtier 17D du dispositif de détection de fin de course 21 peut être formé par une partie du carter 17 rapportée sur la partie 17A du carter 17 et fixée sur celle-ci, par exemple au moyen d'éléments de fixation par vissage ou par encliquetage élastique.

Ici, le boîtier 17D du dispositif de détection de fin de course 21 est cylindrique et présente une section intérieure de forme globalement circulaire.

En variante, non représentée, le boîtier 17D du dispositif de détection de fin de course 21 est de forme parallélépipédique.

En variante, non représentée, l'organe de rappel élastique 23 peut être différent d'un ressort hélicoïdal, par exemple un bloc de matériau élastiquement déformable.

L'organe 22 est mobile en translation selon un axe A22 radial à l'axe de rotation X. L'organe 22 est pourvu d'une tige rectiligne 22A qui est engagée dans un tube creux 17E, formé par une partie du carter 17 et qui est centré sur l'axe A22. Le mouvement de translation de l'organe 22 selon l'axe A22 est guidé par la coopération de formes des parties 17E et 22A.

L'organe 22 comprend une tête 22B en saillie du boîtier 17D et destinée à recevoir en appui la première lame 3h, lorsque l'écran 2 parvient dans sa position de fin de course haute. Pour ce faire, le boîtier 17D et l'organe 22 sont engagés par le dessus dans une lumière, non représentée, ménagée dans la paroi de fond 9a du rail 9. Lorsqu'il est repoussé par la première lame 3h le long de l'axe A22, l'organe 22 actionne un interrupteur 43 porté par la carte de circuit imprimé 42. Ceci permet à l'unité électronique de contrôle 19 de détecter que l'écran 2 est en position de fin de course haute.

Dans un exemple de réalisation, le carter 17 est réalisé au moins en partie dans un matériau métallique.

La matière du carter de l'actionneur électromécanique n'est pas limitative et peut être différente. Il peut, en particulier, s'agir d'une matière plastique.

L'unité électronique de contrôle 19 est configurée pour commander, autrement dit commande, le moteur électrique 18 dans un premier mode de fonctionnement, dit de commande, normal ou d'usage, où elle alimente en énergie électrique le moteur électrique 18 en fonction des mouvements de montée ou de descente de l'écran 2, ainsi que des mouvements d'orientation des lames 3 de l'écran 2.

L'unité électronique de contrôle 19 est également configurée pour commander, autrement dit commande, le moteur électrique 18 dans un deuxième mode de fonctionnement, en particulier d'apprentissage, de configuration, de programmation ou de réglage, qui met en oeuvre le dispositif de comptage 35 pour déterminer et mémoriser une ou plusieurs positions de fin de course de l'écran 2.

Lors de la mise en service du dispositif d'occultation 1 et au cours de sa durée d'utilisation, il est nécessaire de faire basculer l'unité électronique de contrôle 19 entre les premier et deuxième modes de fonctionnement.

L'actionneur électromécanique 8 comprend, en outre, un dispositif de commande de basculement 25. Le dispositif de commande de basculement 25 est configuré pour basculer, autrement dit bascule, l'unité électronique de contrôle 19 entre les premier et deuxième modes de fonctionnement.

Le dispositif de commande de basculement 25 est basé sur une technologie de détection magnétique, plus fiable que les dispositifs de commande de basculement purement mécaniques de l'art antérieur, qui permet de savoir précisément quand l'unité électronique de contrôle 19 doit basculer entre les premier et deuxième modes de fonctionnement.

Avantageusement, le long d'un axe A17, illustré à la figure 2, défini par le carter 17 et parallèle à l'axe de rotation X, le dispositif de commande de basculement 25 est adjacent au dispositif de détection de fin de course 21.

Ainsi, le dispositif de commande de basculement 25 peut être inséré dans la même lumière ménagée dans la paroi de fond 9a du rail 9 que celle du dispositif de détection de fin de course 21 ou dans une lumière adjacente ménagée dans la paroi de fond 9a du rail 9 à celle du dispositif de détection de fin de course 21, tout en étant accessible par le dessous de ce rail 9.

A cet égard, le dispositif de commande de basculement 25 est positionné d'une façon comparable aux dispositifs purement mécaniques de l'art antérieur, de sorte que son incorporation dans le dispositif d'occultation 1 conforme à l'invention ne change pas fondamentalement les habitudes de travail d'un opérateur habitué aux matériels déjà présents sur le marché et comprenant un dispositif de commande de basculement purement mécanique.

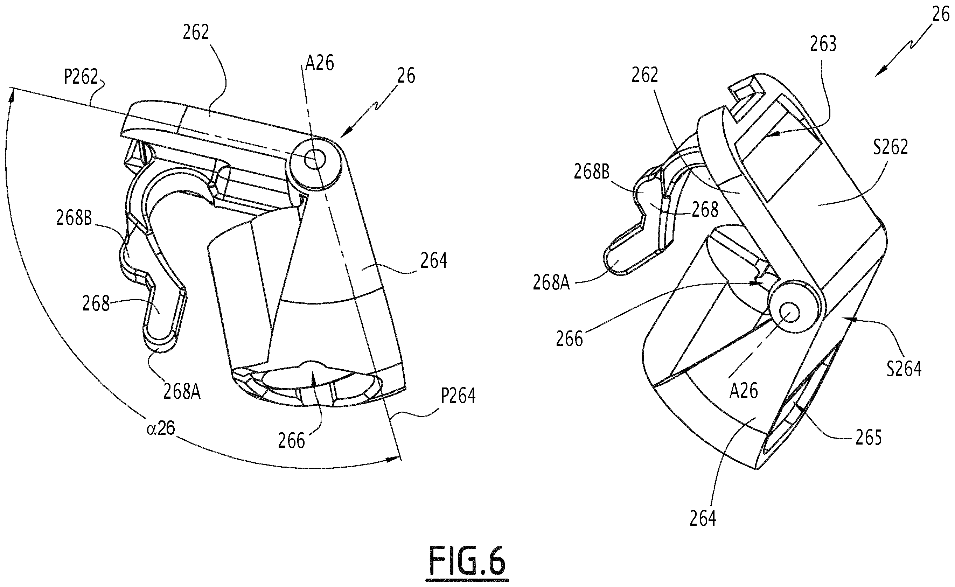

Le dispositif de commande de basculement 25 comprend un volet 26, visible en perspective sous deux angles différents à la figure 6. Le volet 26 est monté pivotant, autour d'un axe A25, dans un boîtier 17F, formé par une partie du carter 17, dans l'exemple monobloc avec la partie 17A du carter 17.

En variante, non représentée, le boîtier 17F du dispositif de commande de basculement 25 peut être formé par une partie du carter 17 rapportée sur la partie 17A du carter 17 et fixée sur celle-ci, par exemple au moyen d'éléments de fixation par vissage ou par encliquetage élastique.

Le boîtier 17F peut également être appelé premier boîtier et le boîtier 17D peut également être appelé deuxième boîtier.

Avantageusement, l'axe A25 d'articulation du volet 26 par rapport au boîtier 17F est parallèle à l'axe de rotation X, en particulier dans la configuration assemblée de l'actionneur électromécanique 8.

En variante, non représentée, l'axe A25 peut être orienté différemment, notamment être perpendiculaire à l'axe de rotation X.

Avantageusement, le volet 26 est réalisé dans un matériau amagnétique.

Avantageusement, le volet 26 comprend un premier panneau 262 et un deuxième panneau 264.

Ici, les premier et deuxième panneaux 262, 264 s'étendent chacun selon un plan P262, P264.

Les plans P262, P264 définissent entre eux un angle α26 autour d'un axe A26 du volet 26 qui est confondu avec l'axe A25 en configuration montée du volet 26 dans le boîtier 17F.

On note B17 un bord, dit « libre », du boîtier 17F, opposé à la partie 17A du carter 17. Ce bord B17 délimite une ouverture d'accès au volume interne du boîtier 17F, dans lequel est logé le volet 26.

Ici, ce bord B17 a une forme globalement rectangulaire, avec des coins arrondis, ce qui correspond à la section du boîtier 17F dans sa partie la plus éloignée de la partie 17A du carter 17. Dans l'exemple des figures, l'axe A25 est parallèle aux petits côtés du bord B17 et est disposé à égale distance de ces petits côtés.

Comme le montre la figure 5, les inserts A) et B) représentent deux positions stables de fonctionnement du dispositif de commande de basculement 25.

Avantageusement, une surface externe S264 du deuxième panneau 264 du volet 26 est affleurante avec le bord B17 dans une première position, dite extrême, du volet 26 représentée aux figures 2 à 4 et sur l'insert A) de la figure 5. En outre, une surface externe S262 du premier panneau 262 du volet 26 est affleurante avec ce même bord B17 dans une deuxième position, dite extrême, du volet 26 représentée sur l'insert B) de la figure 5.

Le volet 26 peut prendre toutes les positions intermédiaires entre la première position et la deuxième position, en tournant autour de l'axe A25.

Le passage de la première position du volet 26 représentée sur l'insert A) à la deuxième position représentée sur l'insert B) a lieu par basculement du volet 26 autour des axes A25 et A26 confondus, sur un secteur angulaire dont on note β26 l'angle au sommet.

Ici et de manière nullement limitative, la somme des angles α26 et β26 est égale à 180°.

Avantageusement, le premier panneau 262 est pourvu, sur sa surface externe S262, d'un premier logement en creux 263.

Ainsi, ce premier logement en creux 263 permet de recevoir la pointe d'un outil, tel qu'un tournevis, lorsqu'un opérateur exerce sur le premier panneau 262 un effort de pivotement autour des axes A25, A26, comme représenté par la flèche F1 sur l'insert B) de la figure 5, de sorte à basculer le volet 26 de sa deuxième position à sa première position.

De la même façon, le deuxième panneau 264 est pourvu, sur sa surface externe S264, d'un deuxième logement en creux 265.

Ainsi, ce deuxième logement en creux 265 permet de recevoir l'extrémité d'un outil, tel qu'un tournevis, lorsqu'un opérateur exerce sur le deuxième panneau 264 un effort de pivotement autour des axes A25, A26, comme représenté par la flèche F2 sur l'insert A) de la figure 5, de sorte à basculer le volet 26 de sa première position à sa deuxième position.

En variante, non représentée, les premier et deuxième panneaux 262, 264 sont dépourvus de premier et deuxième logements en creux 263, 265.

Avantageusement, le volet 26, en particulier le deuxième panneau 264, comprend un logement 266, dans lequel est disposé un aimant permanent 27, qui appartient au dispositif de commande de basculement 25.

Ici, l'aimant permanent 27 est complètement reçu dans le logement 266.

En variante, non représentée, une partie de l'aimant permanent 27 peut être en saillie du logement 266.

D'autre part, le dispositif de commande de basculement 25 comprend un capteur magnétique 28, en particulier à effet Hall. Ce capteur magnétique 28 est monté à l'intérieur du carter 17, à proximité du boîtier 17F, plus précisément à proximité d'une surface intérieure de ce boîtier 17F. Ce capteur magnétique 28 est supporté par la carte de circuit imprimé 42, ou par un autre support, qui appartient également à l'unité de contrôle électronique 19.

Lorsque le volet 26 passe de sa première position à sa deuxième position, ou inversement, le déplacement de l'aimant permanent 27 induit par le pivotement du volet 26, en particulier du deuxième panneau 264, autour de l'axe A25 est détecté par le capteur magnétique 28.

Ainsi, le capteur magnétique 28 est en mesure de signaler au microcontrôleur 29 que le dispositif de commande de basculement 25 a été actionné, du fait de l'application de l'un des efforts représentés par les flèches F1, F2.

La forme intérieure du boîtier 17F est compatible avec le pivotement du volet 26, en particulier du deuxième panneau 264, entre ses première et deuxième positions représentées sur les deux inserts A, B de la figure 5.

A cet effet, la surface intérieure du boîtier 17F comprend un tronçon 172 en forme de cylindre à section circulaire centré sur l'axe A25 et dont le rayon est supérieur ou égal à la plus grande dimension du deuxième panneau 264 mesuré radialement à l'axe A26.

Le volet 26 comprend au moins une patte de retenue en position 268 du volet 26.

Ici, le volet 26, en particulier le premier panneau 262, comprend une seule patte de retenue en position 268.

Avantageusement, le boîtier 17F comprend une première butée et une deuxième butée. La première butée est configurée pour coopérer, autrement dit coopère, avec la patte de retenue en position 268, lorsque le volet 26 est dans la première position. En outre, la deuxième butée est configurée pour coopérer, autrement dit coopère, avec la patte de retenue en position 268, lorsque le volet 26 est dans la deuxième position.

Ici, le boîtier 17F, en particulier sa surface intérieure, comprend, d'une part, une encoche 174 définissant la première butée du boîtier 17F et, d'autre part, un coin rentrant 176 et un renfoncement 178 définissant la deuxième butée du boîtier 17F.

Ainsi, la patte de retenue en position 268 est configurée pour coopérer, autrement dit coopère, avec l'encoche 174 dans la première position du volet 26 et avec le coin rentrant 176 et le renfoncement 178 dans la deuxième position de ce volet 26.

Ici, la patte de retenue en position 268 est élastiquement déformable.

Ici, la patte de retenue en position 268 comprend une extrémité libre 268A.

D'une part, dans la première position du volet 26, l'extrémité libre 268A de la patte de retenue en position 268 est engagée dans l'encoche 174.

En outre, au moyen d'une déformation élastique de la patte de retenue en position 268, qui est alors en appui contre un bord de l'encoche 174, son extrémité libre 268A peut être extraite de l'encoche 174.

Dans ces conditions, lorsque le volet 26 est dans sa première position représentée à l'insert A) de la figure 5, il est par défaut maintenu dans cette position par la patte de retenue en position 268.

Ainsi, la position représentée sur l'insert A de la figure 5 est une position stable.

De cette manière, l'aimant permanent 27 ne risque pas d'être déplacé de façon accidentelle autour de l'axe A25. Aucun mouvement parasite de l'aimant permanent 27 autour de l'axe A25 ne risque donc d'être détecté par le capteur magnétique 28.

Ici, la patte de retenue en position 268 comprend, en outre, un bourrelet 268B.

D'autre part, dans la deuxième position du volet 26, l'extrémité libre 268A de la patte de retenue en position 268 est engagée dans le coin rentrant 176 et le bourrelet 268B de la patte de retenue en position 268 est engagé dans le renfoncement 178.

En outre, au moyen d'une déformation élastique de la patte de retenue en position 268, qui est alors en appui contre un bord du renfoncement 178, le bourrelet 268B peut sortir du renfoncement 178.

Dans ces conditions, lorsque le volet 26 est dans sa deuxième position représentée à l'insert B) de la figure 5, il est par défaut maintenu dans cette position par la patte de retenue en position 268.

Ainsi, la position représentée sur l'insert B) de la figure 5 est également une position stable.

De cette manière, l'aimant permanent 27 ne risque pas d'être déplacé de façon accidentelle autour de l'axe A25. Aucun mouvement parasite de l'aimant permanent 27 autour de l'axe A25 ne risque donc d'être détecté par le capteur magnétique 28.

Par conséquent, le volet 26 peut être qualifié de « bistable », car les deux positions représentées sur les inserts A) et B) de la figure 5 sont des positions stables, dans lesquelles le volet 26 est immobilisé en rotation autour de l'axe A25 par appui de la patte de retenue en position 268 sur la surface interne du boîtier 17F, plus particulièrement au niveau des reliefs internes concaves 174, 176, 178.

Compte tenu du caractère bistable du volet 26, aucune fausse détection d'une activation du dispositif de commande de basculement 25 par l'opérateur ne risque de se produire.

Avantageusement, c'est la même patte de retenue en position 268 qui est susceptible de venir en appui contre la surface interne du boîtier 17F dans les première et deuxième positions du volet 26.

Ceci est avantageux en termes de fabrication et d'inertie du volet 26.

En variante, non représentée, le volet 26, comprend une pluralité de pattes de retenue en position 268.

Dans un tel cas, le volet 26 peut être équipé d'une première patte de retenue en position 268, configurée pour prendre appui, autrement dit prenant appui, sur le boîtier 17F, lorsque celui-ci est dans sa première position et d'une deuxième patte de retenue en position 268, configurée pour prendre appui, autrement dit prenant appui, sur le boîtier 17F, lorsqu'il est dans sa deuxième position, la deuxième patte de retenue en position 268 étant différente de la première patte de retenue en position 268. La première patte de retenue en position 268 est configurée pour coopérer, autrement dit coopère, avec l'encoche 174. En outre, la deuxième patte de retenue en position 268 est configurée pour coopérer, autrement dit coopère, avec le renfoncement 178. Ces deux pattes de retenue en position 268 rendent alors stables, à elles deux, les deux positions du volet 26 en venant en appui respectivement contre une première butée et contre une deuxième butée, comparables aux reliefs internes concaves 174, 176, 178.

La position de l'aimant permanent 27 peut être repérée par le capteur magnétique 28, par exemple en détectant la distance et/ou l'orientation relative(s) du pôle Sud ou du pôle Nord de l'aimant permanent 27 par rapport au capteur magnétique 28. Cette position de l'aimant permanent 27 détectée par le capteur magnétique 28 peut être stockée dans une mémoire 47, en particulier non volatile, de l'unité électronique de contrôle 19, en particulier du microcontrôleur 29, sous la forme d'un paramètre représentatif de cette position. Ce paramètre peut être binaire, par exemple égal à 0 ou 1, pour représenter soit la position de l'insert A) soit la position de l'insert B) de la figure 5. En variante, ce paramètre peut être proportionnel et correspondre à une distance ou une valeur d'angle mesurée entre le capteur magnétique 28 et le pôle Sud ou Nord de l'aimant permanent 27.

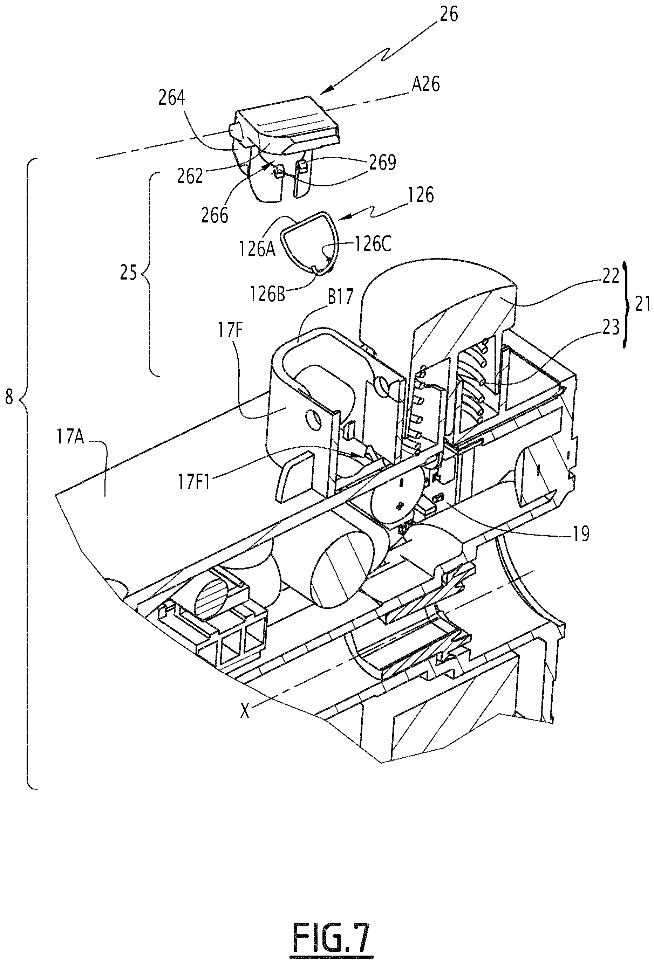

Dans le deuxième mode de réalisation, illustré partiellement à la figure 7, les éléments analogues à ceux du premier mode de réalisation portent les mêmes références et fonctionnent comme expliqué ci-dessus. Si une référence est mentionnée dans cette description au sujet du deuxième mode de réalisation sans être portée sur la figure 7, elle désigne le même élément que celui identifié sur l'une des figures 1 à 6 avec cette référence au sujet du premier mode de réalisation. Si une référence est utilisée sur la figure 7 sans être mentionnée dans la description, elle désigne le même élément que celui identifié dans la description avec cette référence pour le premier mode de réalisation. Dans ce qui suit, on décrit principalement ce qui distingue le deuxième mode de réalisation du premier mode de réalisation.

Dans le deuxième mode de réalisation, l'actionneur électromécanique 8 comprend, en outre, un organe mécanique 126. L'organe mécanique 26 est configuré pour délivrer, autrement dit délivre, une information sonore, lorsque le volet 26 pivote entre sa première position et sa deuxième position, et/ou inversement.

Avantageusement, l'organe mécanique 126 est un élément de rappel élastique, en particulier un ressort.

Avantageusement, l'organe mécanique 126 est interposé entre le volet 26, qui est comparable au volet 26 du premier mode de réalisation, et une partie 17F1, en particulier le fond, du boîtier 17F.

Ici, le volet 26 et le boîtier 17F appartiennent au dispositif de commande de basculement 25.

Ainsi, l'organe mécanique 126 est logé, autrement dit est configuré pour être logé, à l'intérieur du boîtier 17F, en particulier dans la configuration assemblée de l'actionneur électromécanique 8.

Avantageusement, le volet 26 comprend, en outre, deux pattes de maintien 269. En outre, l'organe mécanique 126 est monté, autrement dit est configuré pour être monté, sur les deux pattes de maintien 269 du volet 26, en particulier dans la configuration assemblée de l'actionneur électromécanique 8.

Avantageusement, l'organe mécanique 126 vient en appui, autrement dit est configuré pour venir en appui, contre la partie 17F1 du boîtier 17F, lorsque le volet 26 pivote entre sa première position et sa deuxième position, et/ou inversement.

Ainsi, lors du basculement du volet 26 entre ses première et deuxièmes positions, ou inversement, définies comme dans le premier mode de réalisation, l'organe mécanique 126 est comprimé et puis se détend brusquement en faisant un bruit de « clic » qui est perçu par l'utilisateur.

De cette manière, l'utilisateur est informé par l'information sonore délivrée par l'organe mécanique 126 que le volet 26 a effectivement changé de position, de sa première position vers sa deuxième position, ou inversement.

L'organe mécanique 126 peut délivrer une telle information lorsque le volet 26 pivote de sa première position vers sa deuxième position, de sa deuxième position vers sa première position ou dans les deux cas.

Avantageusement, l'organe mécanique 126 est métallique, par exemple réalisé en acier.

En variante, l'organe mécanique 126 peut être réalisé dans un autre matériau, notamment composite.

Ici et comme illustré à la figure 7, l'organe mécanique 126 est en forme de boucle. L'organe mécanique 126 comprend une partie rectiligne 126A destinée à être montée sur les deux pattes de maintien 269 du volet 26, à la façon d'une charnière. En outre, l'organe mécanique 126 comprend deux extrémités courbes 126B, 126C, entre lesquelles est définie une portion d'appui de l'organe mécanique 126 contre la partie 17F1 du boîtier 17F.

En variante, non représentée, l'organe mécanique 126 peut avoir une forme différente ou être remplacé par un autre organe mécanique, tel que, par exemple, une agrafe ou une languette, capable de délivrer une information sonore à l'utilisateur lorsque le volet 26 pivote entre ses première et deuxième positions, ou inversement.

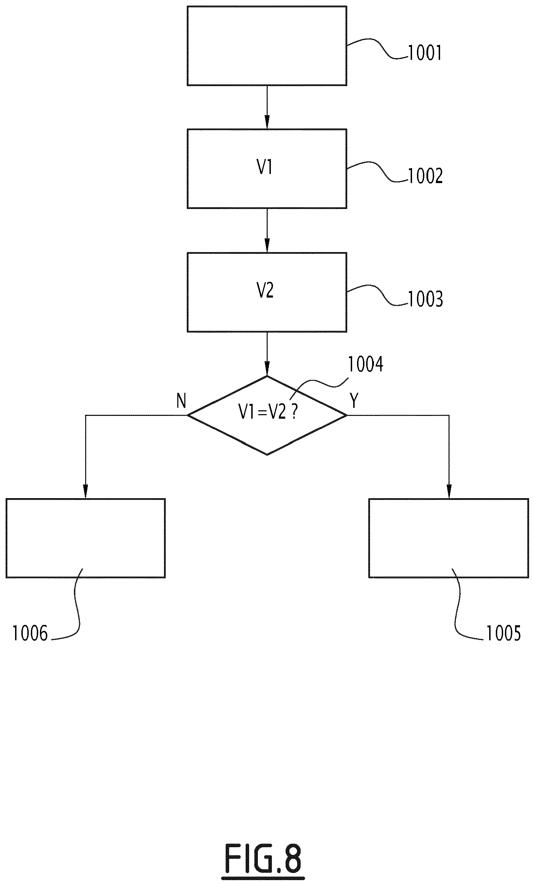

On décrit à présent, en référence à la figure 8, un mode d'exécution d'un procédé de commande de l'actionneur électromécanique 8 du dispositif d'occultation 1 conforme au premier mode de réalisation de l'invention, illustré aux figures 2 à 6, ou de l'actionneur électromécanique 8 du dispositif d'occultation 1 conforme au deuxième mode de réalisation de l'invention, illustré à la figure 7.

Ce procédé est mis en oeuvre au moyen de l'unité électronique de contrôle 19 et, en particulier, du microcontrôleur 29.

Avantageusement, le procédé comprend, initialement, une première étape 1001 de mise sous tension de l'actionneur électromécanique 8.

Une première valeur V1 du paramètre représentatif de la position de l'aimant permanent 27 détectée par le capteur magnétique 28 a été stockée dans la mémoire 47 de l'unité électronique de contrôle 19.

Cette mémorisation de la première valeur V1 a pu être mise en oeuvre, notamment, lors de la dernière mise sous tension précédente de l'actionneur électromécanique 8.

Cette première valeur V1 est mémorisée dans la mémoire 47, y compris lors d'un arrêt de l'alimentation en énergie électrique de l'actionneur électromécanique 8.

Le procédé comprend une deuxième étape 1002 de lecture de la première valeur V1, dans la mémoire 47 de l'unité électronique de contrôle 19.

Avantageusement, la deuxième étape 1002 de lecture peut être mise en oeuvre suite à la première étape 1001 de mise sous tension de l'actionneur électromécanique 8.

Dans ce cas, la mémorisation de la première valeur V1 est mise en oeuvre lors d'une étape de mise sous tension de l'actionneur électromécanique 8 antérieure à la présente étape de mise sous tension 1001.

Le procédé comprend une troisième étape 1003 de détection de la position de l'aimant permanent 27 par le capteur magnétique 28. Une deuxième valeur V2 du même paramètre que celui de la première valeur V1 est déterminée lors de cette troisième étape 1003 de détection. Puis, cette deuxième valeur V2 est stockée dans la mémoire 47 de l'unité électronique de contrôle 19.

Avantageusement, la troisième étape 1003 de détection peut être mise en oeuvre suite à la première étape 1001 de mise sous tension de l'actionneur électromécanique 8.

L'ordre des deuxième et troisième étapes 1002, 1003 peut être inversé ou celles-ci peuvent être exécutées simultanément.

Le procédé comprend une quatrième étape 1004 de comparaison de la première valeur V1, lue lors de la deuxième étape 1002 de lecture, avec la deuxième valeur V2, déterminée lors de la troisième étape 1003 de détection.

Le procédé comprend une première étape 1005 de mise en fonctionnement de l'unité électronique de contrôle 19 dans le premier mode de fonctionnement et une deuxième étape 1006 de mise en fonctionnement de l'unité électronique de contrôle 19 dans le deuxième mode de fonctionnement.

Si, lors de la quatrième étape 1004 de comparaison, la première valeur V1, lue à la deuxième étape 1002 de lecture, est déterminée comme étant identique à la deuxième valeur V2, déterminée à la troisième étape 1003 de détection, alors le procédé met en oeuvre la première étape 1005 de mise en fonctionnement de l'unité électronique de contrôle 19 dans le premier mode de fonctionnement.

Ainsi, si le résultat de cette comparaison est que la deuxième valeur V2 est égale à la première valeur V1, c'est-à-dire que la deuxième valeur V2 du paramètre détecté par le capteur magnétique 28 n'a pas changé depuis la dernière mise sous tension précédente de l'actionneur électromécanique 8, alors le dispositif de commande de basculement 25 n'a pas été actionné. Dans ce cas, la première étape 1005 de mise en fonctionnement, autrement dit de commande, de l'actionneur électromécanique 8 est exécutée.

Si, lors de la quatrième étape 1004 de comparaison, la première valeur V1, lue à la deuxième étape 1002 de lecture, est déterminée comme étant différente de la deuxième valeur V2, déterminée à la troisième étape 1003 de détection, alors le procédé met en oeuvre la deuxième étape 1006 de mise en fonctionnement de l'unité électronique de contrôle 19 dans le deuxième mode de fonctionnement.

Ainsi, si la deuxième valeur V2 diffère de la première valeur V1, c'est-à-dire que la deuxième valeur V2 du paramètre détecté par le capteur magnétique 28 a changé depuis la dernière mise sous tension précédente de l'actionneur électromécanique 8, alors le dispositif de commande de basculement 25 a été actionné, en passant de l'une des positions représentées à la figure 5 à l'autre de ces positions. Dans ce cas, la deuxième étape 1006 de mise en fonctionnement, autrement dit de réglage, de l'actionneur électromécanique 8 est exécutée.

De cette manière, l'actionneur électromécanique 8 peut être piloté dans le deuxième mode de fonctionnement par l'unité électronique de contrôle 19, en particulier dans un mode de fonctionnement permettant de régler l'une au moins des positions de fin de course.

Grâce à la présente invention, quel que soit le mode de réalisation, le dispositif de commande de basculement peut être facilement intégré à l'actionneur électromécanique. La patte de retenue en position du volet par rapport au boîtier garantit un fonctionnement bistable du dispositif de commande de basculement.

De cette manière, le dispositif de commande de basculement permet de piloter de façon fiable le basculement de l'unité électronique de contrôle entre au moins ses deux modes de fonctionnement.

En outre, le fait de monter l'aimant permanent sur le volet permet de réaliser le dispositif de commande de basculement sous une forme compacte et garantit une détection fiable de son activation par un opérateur.

De nombreuses modifications peuvent être apportées aux exemples de réalisation décrits précédemment, sans sortir du cadre de l'invention défini par les revendications.

Dans un autre exemple de réalisation, non représenté, le dispositif d'entraînement motorisé 7 comprend, outre une pluralité de premiers enrouleurs des cordons d'entraînement 5, une pluralité de deuxièmes enrouleurs des cordons d'orientation 6. Dans ce cas, les cordons d'entraînement 5 sont reliés, d'une part, à la barre de charge 4 et, d'autre part, aux premiers enrouleurs. Les cordons d'orientation 6 sont reliés, d'une part, à la barre de charge 4 et aux lames 3 et, d'autre part, aux deuxièmes enrouleurs. En pratique, l'extrémité inférieure de chaque cordon d'entraînement 5 est reliée à la barre de charge 4 et l'extrémité supérieure de chaque cordon d'entraînement 5 est reliée à l'un des premiers enrouleurs, en particulier dans la configuration assemblée du dispositif d'occultation 1 dans l'installation 100. L'extrémité inférieure de chaque cordon d'orientation 6 est reliée à la barre de charge 4 et l'extrémité supérieure de chaque cordon d'orientation 6 est reliée à l'un des deuxièmes enrouleurs, en particulier dans la configuration assemblée du dispositif d'occultation 1 dans l'installation 100. Préférentiellement, les premiers et deuxièmes enrouleurs sont disposés à l'intérieur du rail 9.

Dans un autre exemple de réalisation, non représenté, le dispositif d'entraînement motorisé 7 comprend deux chaînes d'entraînement et d'orientation des lames 3 de l'écran 2, en remplacement des cordons d'entraînement 5 et des cordons d'orientation 6. Dans un tel cas, chaque chaîne est disposée à l'intérieur de l'une des coulisses, disposée le long d'un côté de l'écran 2 du dispositif d'occultation 1.

En variante, le deuxième module de communication 49 de l'unité électronique de contrôle 19 est configuré pour recevoir, autrement dit reçoit, et, éventuellement, pour émettre, autrement dit émet, des ordres de commande transmis par des moyens sans fil, en particulier, des ordres de commande radioélectriques. En outre, le premier module de communication 48 de l'unité de commande locale 14 ou centrale 15 est configuré pour émettre, autrement dit émet, et, éventuellement, pour recevoir, autrement dit reçoit, des ordres de commande, en particulier par des moyens sans fil, par exemple radioélectriques.

En variante, le capteur magnétique 28 peut être différent d'un capteur à effet Hall. Il peut s'agir d'un capteur inductif ou d'un capteur magnéto-résistif, pouvant être basé, par exemple, sur une technologie dite « GMR » (acronyme de l'expression anglo-saxonne « Giant Magnéto Résistance »).

Sur les inserts A) et B) de la figure 5, un jeu est visible entre l'extrémité libre 268A de la patte de retenue en position 268 et le bord de l'encoche 174 ou le bord du coin rentrant 176 et entre le bourrelet 268B de la patte de retenue en position 268 et le bord du renfoncement 178. En variante, non représentée, l'une au moins des parties 268A, 268B de la patte de retenue en position 268 peut être en contact avec le bord de l'un de ces reliefs internes concaves 174, 176, 178 dans la première et/ou dans la deuxième position du volet 26.

En variante, le dispositif de commande de basculement 25 peut être configuré pour basculer l'unité électronique de contrôle 19 dans un autre mode de fonctionnement. Cet autre mode de fonctionnement de l'unité électronique de contrôle 19 peut être en complément ou en remplacement du deuxième de fonctionnement, dit de « paramétrage » d'une ou plusieurs positions de fin de course de l'écran 2.

A titre d'exemples nullement limitatifs, l'unité électronique de contrôle 19 peut être basculée :
- dans un troisième mode de fonctionnement, où la ou les positions de fin de course de l'écran 2 sont réinitialisées. L'entrée dans ce troisième mode de fonctionnement peut être mise en oeuvre, notamment, en exécutant une séquence prédéterminée de commutations du volet 26 entre ses première et deuxième positions, et/ou
- dans un quatrième mode de fonctionnement, où l'écran 2 est entraîné en déplacement jusqu'à la position de fin de course haute, dite de sécurité, autrement dit à une mise en appui de la première lame 3h de l'écran 2 contre l'organe 22 du dispositif de détection de fin de course 21. L'entrée dans ce quatrième mode de fonctionnement peut être mise en oeuvre, notamment, par une séquence prédéterminée de commutations du volet 26 entre ses première et deuxième positions, et/ou
- dans un cinquième mode de fonctionnement, où un niveau de sensibilité d'une détection d'obstacle, lors de l'entraînement en déplacement de l'écran 2 par l'actionneur électromécanique 8, est réglé, voire la désactivation de la détection d'obstacle. L'entrée dans ce cinquième mode de fonctionnement peut être mise en oeuvre, par exemple, par une séquence prédéterminée de commutations du volet 26 entre ses première et deuxième positions. La détection d'obstacle peut être mise en oeuvre par l'unité électronique de contrôle 19, de manière temporelle, au moyen du microcontrôleur 29, et/ou au travers du dispositif de comptage 35, et/ou par une mesure d'un paramètre de fonctionnement du moteur électrique 18, telle qu'une mesure de courant traversant le moteur électrique 18 au moyen d'une résistance de shunt.

La séquence prédéterminée de commutations du volet 26 pour entrer dans l'un des modes de fonctionnement peut être définie en fonction du nombre de commutations successives et/ou d'une durée de chaque commutation du volet 26.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (8) pour un dispositif d'occultation (1), l'actionneur électromécanique (8) comprenant au moins :
- un moteur électrique (18),
- une unité électronique de contrôle (19), l'unité électronique de contrôle (19) étant configurée pour commander le moteur électrique (18) dans un premier mode de fonctionnement et au moins dans un deuxième mode de fonctionnement,
- un carter (17), le moteur électrique (18) et l'unité électronique de contrôle (19) étant logés à l'intérieur du carter (17),
- un arbre de sortie (186), l'arbre de sortie (186) étant monté rotatif autour d'un axe de rotation (X), et
- un dispositif de commande de basculement (25), le dispositif de commande de basculement (25) étant configuré pour basculer l'unité électronique de contrôle (19) entre les premier et deuxième modes de fonctionnement,
le dispositif de commande de basculement (25) comprenant :
- un boîtier (17F),
- un volet (26), le volet (26) étant monté pivotant autour d'un axe (A26) par rapport au boîtier (17F), entre une première position et une deuxième position,
- un aimant permanent (27), l'aimant permanent (27) étant monté sur le volet (26), et
- un capteur magnétique (28), le capteur magnétique (28) étant configuré pour détecter une position de l'aimant permanent (27),
**caractérisé en ce que** le volet (26) comprend au moins une patte de retenue en position (268) du volet (26), la ou l'une des pattes de retenue en position (268) étant maintenue en position par rapport au boîtier (17F) dans chacune des première et deuxième positions du volet (26), de sorte que chacune des première et deuxième positions du volet (26) est stable.

2. Actionneur électromécanique (8) pour un dispositif d'occultation (1) selon la revendication 1, **caractérisé en ce que** la même patte de retenue en position (268) est en appui contre le boîtier (17F), lorsque le volet (26) est dans la première position ou dans la deuxième position.

3. Actionneur électromécanique (8) pour un dispositif d'occultation (1) selon la revendication 1 ou selon la revendication 2, **caractérisé en ce que** le boîtier (17F) comprend :
- une première butée (174), la première butée (174) étant configurée pour coopérer avec la ou l'une des pattes de retenue en position (268), lorsque le volet (26) est dans la première position, et
- une deuxième butée (176, 178), la deuxième butée (176, 178) étant configurée pour coopérer avec la ou l'une des pattes de retenue en position (268), lorsque le volet (26) est dans la deuxième position.

4. Actionneur électromécanique (8) pour un dispositif d'occultation (1) selon l'une quelconque des revendications 1 à 3, **caractérisé en ce que** le volet (26) est une pièce monobloc en matériau amagnétique.

5. Actionneur électromécanique (8) pour un dispositif d'occultation (1) selon l'une quelconque des revendications 1 à 4, **caractérisé en ce que** le capteur magnétique (28) est un capteur à effet Hall.

6. Actionneur électromécanique (8) pour un dispositif d'occultation (1) selon l'une quelconque des revendications 1 à 5, **caractérisé en ce que** le volet (26) comprend deux panneaux (262, 264), chacun des deux panneaux (262, 264) étant affleurant avec un bord (B17) du boîtier (17F) dans l'une des première et deuxième positions du volet (26).

7. Actionneur électromécanique (8) pour un dispositif d'occultation (1) selon l'une quelconque des revendications 1 à 6, **caractérisé en ce que** l'actionneur électromécanique (8) comprend, en outre, un dispositif de détection de fin de course (21), le dispositif de détection de fin de course (21) étant configuré pour détecter l'atteinte d'une position de fin de course haute d'un écran (2) du dispositif d'occultation (1) entraîné en déplacement par l'actionneur électromécanique (8).

8. Actionneur électromécanique (8) pour un dispositif d'occultation (1) selon la revendication 7, **caractérisé en ce que** le dispositif de commande de basculement (25) est adjacent au dispositif de détection de fin de course (21), le long d'un axe (A17) parallèle à l'axe de rotation (X).

9. Actionneur électromécanique (8) pour un d'un dispositif d'occultation (1) selon l'une quelconque des revendications 1 à 8, **caractérisé en ce que** l'actionneur électromécanique (8) comprend, en outre, un organe mécanique (126), l'organe mécanique (126) étant configuré pour délivrer une information sonore, lorsque le volet (26) pivote entre sa première position et sa deuxième position, et/ou inversement.

10. Actionneur électromécanique (8) pour un dispositif d'occultation (1) selon la revendication 9, **caractérisé en ce que** l'organe mécanique (126) est un élément de rappel élastique, l'organe mécanique (126) étant interposé entre le volet (26) et une partie (17F1) du boîtier (17F).

11. Dispositif d'occultation (1), le dispositif d'occultation (1) comprenant au moins :
- un rail (9),
- un écran (2), et
- un actionneur électromécanique (8) conforme à l'une quelconque des revendications 1 à 10, l'actionneur électromécanique (8) étant disposé à l'intérieur du rail (9), l'écran (2) étant entraîné en déplacement par l'actionneur électromécanique (8).

12. Procédé de commande d'un actionneur électromécanique (8) pour un dispositif d'occultation (1) selon l'une quelconque des revendications 1 à 10, **caractérisé en ce que** le procédé comprend au moins les étapes suivantes :
- lecture (1002) dans une mémoire (47) de l'unité électronique de contrôle (19) d'une première valeur (V1) d'un paramètre représentatif d'une position de l'aimant permanent (27) détectée par le capteur magnétique (28) ;
- détection (1003) d'une position de l'aimant permanent (27), au moyen du capteur magnétique (28), en déterminant une deuxième valeur (V2) du même paramètre représentatif de la position de l'aimant permanent (27), et
- comparaison (1004) de la première valeur (V1), lue lors de l'étape de lecture (1002), avec la deuxième valeur (V2), déterminée lors de l'étape de détection (1003),
**en ce que** si, lors de l'étape de comparaison (1004), la première valeur (V1), lue à l'étape de lecture (1002), est déterminée comme étant identique à la deuxième valeur (V2), déterminée à l'étape de détection (1003), alors le procédé met en oeuvre une première étape de mise en fonctionnement (1005) de l'unité électronique de contrôle (19) dans le premier mode de fonctionnement,
et **en ce que** si, lors de de l'étape de comparaison (1004), la première valeur (V1), lue à l'étape de lecture (1002), est déterminée comme étant différente de la deuxième valeur (V2), déterminée à l'étape de détection (1003), alors le procédé met en oeuvre une deuxième étape de mise en fonctionnement (1006) de l'unité électronique de contrôle (19) dans le deuxième mode de fonctionnement.

## Patentansprüche

1. Elektromechanischer Aktuator (8) für eine Verdunkelungsvorrichtung (1), der elektromechanische Aktuator (8) mindestens umfassend:
- einen Elektromotor (18),
- eine elektronische Steuereinheit (19), wobei die elektronische Steuereinheit (19) konfiguriert ist, um den Elektromotor (18) in einer ersten Betriebsart und mindestens in einer zweiten Betriebsart zu steuern,
- ein Gehäuse (17), wobei der Elektromotor (18) und die elektromagnetische Vorrichtung (19) innerhalb des Gehäuses (17) untergebracht sind,
- eine Abtriebswelle (186), wobei die Abtriebswelle (186) drehbar um eine Drehachse (X) gelagert ist, und
- eine Umschaltsteuervorrichtung (25), wobei die Umschaltsteuervorrichtung (25) konfiguriert ist, um die elektronische Steuereinheit (19) zwischen der ersten und der zweiten Betriebsart umzuschalten,
die elektronische Umschaltsteuervorrichtung (25) umfassend:
- ein Gehäuse (17F),
- eine Klappe (26), wobei die Klappe (26) um eine Achse (A26) in Bezug auf das Gehäuse (17F) schwenkbar zwischen einer ersten Position und einer zweiten Position montiert ist,
- einen Permanentmagneten (27), wobei der Permanentmagnet (27) an der Klappe (26) montiert ist, und
- einen Magnetsensor (28), wobei der Magnetsensor (28) konfiguriert ist, um eine Position des Permanentmagneten (27) zu erfassen,
**dadurch gekennzeichnet, dass** die Klappe (26) mindestens eine Positionshaltelasche (268) der Klappe (26) umfasst, wobei die oder eine der Positionshaltelaschen (268) in Bezug auf das Gehäuse (17F) in jeder von der ersten und der zweiten Position der Klappe (26) in Position gehalten wird, sodass jede von der ersten und der zweiten Position der Klappe (26) stabil ist.

2. Elektromechanischer Aktuator (8) für eine Verdunkelungsvorrichtung (1) nach Anspruch 1, **dadurch gekennzeichnet, dass** die gleiche Positionshaltelasche (268) an dem Gehäuse (17F) anliegt, wenn die Klappe (26) in der ersten Position oder in der zweiten Position ist.

3. Elektromechanischer Aktuator (8) für eine Verdunkelungsvorrichtung (1) nach Anspruch 1 oder nach Anspruch 2, **dadurch gekennzeichnet, dass** das Gehäuse (17F) Folgendes umfasst:
- einen ersten Anschlag (174), wobei der erste Anschlag (174) konfiguriert ist, um mit der oder einer der Positionshaltelaschen (268) zusammenzuwirken, wenn die Klappe (26) in der ersten Position ist, und
- einen zweiten Anschlag (176, 178), wobei der zweite Anschlag (176, 178) konfiguriert ist, um mit der oder einer der Positionshaltelaschen (268) zusammenzuwirken, wenn die Klappe (26) in der zweiten Position ist.

4. Elektromechanischer Aktuator (8) für eine Verdunkelungsvorrichtung (1) nach einem der Ansprüche 1 bis 3, **dadurch gekennzeichnet, dass** die Klappe (26) ein einstückiges Teil aus einem nichtmagnetischen Material ist.

5. Elektromechanischer Aktuator (8) für eine Verdunkelungsvorrichtung (1) nach einem der Ansprüche 1 bis 4, **dadurch gekennzeichnet, dass** der Magnetsensor (28) ein Hall-Effekt-Sensor ist.

6. Elektromechanischer Aktuator (8) für eine Verdunkelungsvorrichtung (1) nach einem der Ansprüche 1 bis 5, **dadurch gekennzeichnet dass** die Klappe (26) zwei Platten (262, 264) umfasst, wobei jede der zwei Platten (262, 264) an einer von der ersten und der zweiten Position der Klappe (26) bündig mit einem Rand (B17) des Gehäuses (17F) ist.

7. Elektromechanischer Aktuator (8) für eine Verdunkelungsvorrichtung (1) nach einem der Ansprüche 1 bis 6, **dadurch gekennzeichnet, dass** der elektromechanische Aktuator (8) ferner eine Endlagenerfassungsvorrichtung (21) umfasst, wobei die Endlagenerfassungsvorrichtung (21) konfiguriert ist, um das Erreichen einer oberen Endlage eines Schirms (2) der Verdunkelungsvorrichtung (1), der durch den elektromechanischen Aktuator (8) beweglich angetrieben wird, zu erfassen.

8. Elektromechanischer Aktuator (8) für eine Verdunkelungsvorrichtung (1) nach Anspruch 7, **dadurch gekennzeichnet, dass** die Umschaltsteuervorrichtung (25) entlang einer Achse (A17), die parallel zu der Drehachse (X) ist, an die Endlagenerfassungsvorrichtung (21) angrenzt.

9. Elektromechanischer Betätiger (8) für eine Verdunkelungsvorrichtung (1) nach einem der Ansprüche 1 bis 8, **dadurch gekennzeichnet, dass** der elektromechanische Aktuator (8) ferner ein mechanisches Organ (126) umfasst, wobei das mechanische Element (126) konfiguriert ist, um eine akustische Information abgibt, wenn die Klappe (26) zwischen ihrer ersten Position und ihrer zweiten Position und/oder umgekehrt schwenkt.

10. Elektromechanischer Aktuator (8) für eine Verdunkelungsvorrichtung (1) nach Anspruch 9, **dadurch gekennzeichnet, dass** das mechanische Element (126) ein Rückstellelement ist, wobei das mechanische Organ (126) zwischen die Klappe (26) und einen Teil (17F1) des Gehäuses (17F) eingefügt ist.

11. Verdunkelungsvorrichtung (1), die Verdunkelungsvorrichtung (1) mindestens umfassend:
- eine Schiene (9),
- einen Schirm (2), und
- einen elektromechanischen Aktuator (8) nach einem der Ansprüche 1 bis 10, wobei der elektromechanische Aktuator (8) in der Schiene (9) angeordnet ist, wobei der Schirm (2) durch den elektromechanischen Aktuator (8) in Bewegung versetzt wird.

12. Elektromechanischer Aktuator (8) für eine Verdunkelungsvorrichtung (1) nach einem der Ansprüche 1 bis 10, **dadurch gekennzeichnet, dass** das Verfahren mindestens die folgenden Schritte umfasst:
- Lesen (1002), in einem Speicher (47) der elektronischen Steuereinheit (19), eines ersten Werts (V1) eines Parameters, der für eine Position des Permanentmagneten (27) repräsentativ ist, der von dem Magnetsensor (28) erfasst wird;
- Erfassen (1003) einer Position des Permanentmagneten (27) mittels des Magnetsensors (28) durch Bestimmen eines zweiten Werts (V2) desselben Parameters, der für die Position des Permanentmagneten (27) repräsentativ ist, und
- Vergleichen (1004) des ersten Werts (V1), der in dem Leseschritt (1002) gelesen wird, mit dem zweiten Wert (V2), der in dem Erfassungsschritt (1003) bestimmt wird,
dass, wenn in dem Vergleichsschritt (1004) der erste Wert (V1), der in dem Leseschritt (1002) gelesen wird, als identisch mit dem zweiten Wert (V2), der in dem Erfassungsschritt (1003) bestimmt wird, bestimmt wird, das Verfahren dann einen ersten Schritt des Inbetriebsetzens (1005) der elektronischen Steuereinheit (19) in der ersten Betriebsart durchführt,
und dass, wenn in dem Vergleichsschritt (1004) bestimmt wird, dass der erste Wert (V1), der in dem Leseschritt (1002) gelesen wird, sich von dem zweiten Wert (V2), der in dem Erfassungsschritt (1003) bestimmt wird, unterscheidet, das Verfahren dann einen zweiten Schritt zum Betreiben (1006) der elektronischen Steuereinheit (19) in der zweiten Betriebsart durchführt.

## Claims

1. An electromechanical actuator (8) for a shading device (1), the electromechanical actuator (8) comprising at least:
- an electric motor (18),
- an electronic control unit (19), the electronic control unit (19) being configured to control the electric motor (18) in a first operating mode and at least in a second operating mode,
- a casing (17), the electric motor (18) and the electronic control unit (19) being housed inside the casing (17),
- an output shaft (186), the output shaft (186) being rotatably mounted around an axis of rotation (X), and
- a toggle control device (25), the toggle control device (25) being configured to toggle the electronic control unit (19) between the first and second operating modes,
the toggle control device (25) comprising:
- a housing (17F),
- a shutter (26), the shutter (26) being mounted so as to pivot around an axis (A26) with respect to the housing (17F), between a first position and a second position,
- a permanent magnet (27), the permanent magnet (27) being mounted on the shutter (26), and
- a magnetic sensor (28), the magnetic sensor (28) being configured to detect a position of the permanent magnet (27),
**characterised in that** the shutter (26) comprises at least one position retaining tab (268) of the shutter (26), the or one of the position retaining tabs (268) being held in position with respect to the housing (17F) in each of the first and second positions of the shutter (26), such that each of the first and second positions of the shutter (26) is stable.

2. The electromechanical actuator (8) for a shading device (1) according to claim 1, **characterised in that** the same position retaining tab (268) bears against the housing (17F), when the shutter (26) is in the first position or in the second position.

3. The electromechanical actuator (8) for a shading device (1) according to claim 1 or according to claim 2, **characterised in that** the housing (17F) comprises:
- a first stop (174), the first stop (174) being configured to cooperate with the or one of the position retaining tabs (268), when the shutter (26) is in the first position, and
- a second stop (176, 178), the second stop (176, 178) being configured to cooperate with the or one of the position retaining tabs (268), when the shutter (26) is in the second position.

4. The electromechanical actuator (8) for a shading device (1) according to any one of claims 1 to 3, **characterised in that** the shutter (26) is a one-piece part made of non-magnetic material.

5. The electromechanical actuator (8) for a shading device (1) according to any one of claims 1 to 4, **characterised in that** the magnetic sensor (28) is a Hall-effect sensor.

6. The electromechanical actuator (8) for a shading device (1) according to any one of claims 1 to 5, **characterised in that** the shutter (26) comprises two panels (262, 264), each of the two panels (262, 264) being flush with an edge (B17) of the housing (17F) in one of the first and second positions of the shutter (26).

7. The electromechanical actuator (8) for a shading device (1) according to any one of claims 1 to 6, **characterised in that** the electromechanical actuator (8) further comprises an end-of-travel detection device (21), the end-of-travel detection device (21) being configured to detect the reaching of an upper end-of-travel position of a screen (2) of the shading device (1) driven in displacement by the electromechanical actuator (8).

8. The electromechanical actuator (8) for a shading device (1) according to claim 7, **characterised in that** the toggle control device (25) is adjacent to the end-of-travel detection device (21), along an axis (A17) parallel to the axis of rotation (X).

9. The electromechanical actuator (8) for a shading device (1) according to any one of claims 1 to 8, **characterised in that** the electromechanical actuator (8) further comprises a mechanical member (126), the mechanical member (126) being configured to deliver sound information, when the shutter (26) pivots between its first position and its second position, and/or vice versa.

10. The electromechanical actuator (8) for a shading device (1) according to claim 9, **characterised in that** the mechanical member (126) is a resilient return element, the mechanical member (126) being interposed between the shutter (26) and a part (17F1) of the housing (17F).

11. A shading device (1), the shading device (1) comprising at least:
- a rail (9),
- a screen (2), and
- an electromechanical actuator (8) according to any one of claims 1 to 10, the electromechanical actuator (8) being arranged inside the rail (9), the screen (2) being driven in movement by the electromechanical actuator (8).

12. A method of controlling an electromechanical actuator (8) for a shading device (1) according to any one of claims 1 to 10, **characterised in that** the method includes at least the following steps:
- reading (1002) in a memory (47) of the electronic control unit (19) of a first value (V1) of a parameter representative of a position of the permanent magnet (27) detected by the magnetic sensor (28);
- detection (1003) of a position of the permanent magnet (27), by means of the magnetic sensor (28), by determining a second value (V2) of the same parameter representative of the position of the permanent magnet (27), and
- comparison (1004) of the first value (V1), read during the reading step (1002), with the second value (V2), determined during the detection step (1003),
**in that** if, during the comparison step (1004), the first value (V1), read in the reading step (1002), is determined to be identical to the second value (V2), determined in the detection step (1003), then the method implements a first step (1005) of putting the electronic control unit (19) into operation in the first operating mode,
and **in that** if, during the comparison step (1004), the first value (V1), read in the reading step (1002), is determined to be different from the second value (V2), determined in the detection step (1003), then the method implements a second step (1006) of putting the electronic control unit (19) into operation in the second operating mode.
